# EUROPEAN PATENT APPLICATION

(11) **EP 3 470 163 A1**
(43) Date of publication of application: **17.04.2019**
(21) Application number: 17812636.3
(22) Date of filing: 09.06.2017
(51) Int. Cl.: B23K 20/12

(54) **DOUBLE-SIDED WELDING AND DOUBLE-SIDED SHAPING METHOD FOR LARGE-DIAMETER ALUMINUM ALLOY TUBE-MAKING HELICAL FRICTION STIR WELDING (FSW) EQUIPMENT**

(30) Priority: 12.06.2016 CN 201610406279
(71) Applicant: Shanghai Aerospace Equipment Manufactory, Minhang District Shanghai 200245 (CN)
(72) Inventor: FAN, Zhenchang, Shanghai 200245 (CN); WU, Zhouping, Shanghai 200245 (CN); GUO, Lijie, Shanghai 200245 (CN); ZHAO, Weigang, Shanghai 200245 (CN); SU, Guoyou, Shanghai 200245 (CN)
(74) Representative: Bishton, Amy Virginia
(86) International application number: PCT/CN2017/087743
(87) International publication number: WO 2017/215525

(57) **Abstract**

Embodiments of the present disclosure provide a large-caliber aluminum-alloy tube spiral friction stir welding double-sided welding double-sided forming method, comprising: Step 1: delivering, by a delivery machine, an aluminum-alloy plate into a roller kit, the roller kit coiling the aluminum-alloy plate into a tube; Step 2: externally supporting the aluminum tube and performing inner friction stir welding; Step 3: internally supporting the aluminum tube and performing outer friction stir welding. The method may solve the drawbacks of the existing welding method for a large-caliber aluminum-alloy tube, such as low efficiency and yield and insufficient rigidity, accuracy, and strength, and implements high-quality and high-efficiency automated machining of the large-caliber aluminum-alloy tube.

## Description

### FIELD

Embodiments of the present disclosure generally relate to the field of forming and welding a metal tube, and more particularly relate to a double-sided welding double-sided forming method for a large-caliber aluminum-alloy tube spiral friction stir welding apparatus.

### BACKGROUND

Large-caliber aluminum-alloy tubes refer to metal tubes with an outer diameter greater than 600mm, which are applied to fields such as aerospace, energy, and electricity. However, the current large-caliber aluminum-alloy tubes can only be welded by arc welding through straight seam and circular seam. The straight seam welded aluminum-alloy tube is welded through coiling and forming a square plate and then fixing the coiled and formed square plate by a tool. Because the coiling, forming, and fixing consume much time, the machining is relatively inefficient. As the welding portion is a straight line, its stress is relatively concentrated. The TIG welding and the MIG welding in the aluminum arc welding have an unstable quality and a low machining efficiency (0.2m/min), causing straight seam welding of the large-caliber aluminum-alloy tube inefficient with a low yield rate, low rigidity and low strength; while the plasma welding is highly demanding on the machining process. With increasing maturity of the spiral welding technology and the friction stir welding technology, the spiral friction stir welding technology makes automatic machining of high-strength large-caliber aluminum-alloy tube possible, whose welding speed may reach 1m/min.

### SUMMARY

A technical problem to be solved by the present disclosure is that the existing arc welding process has a low efficiency and a poor quality in welding an aluminum-alloy tube. To solve this problem, the present disclosure provides a double-sided welding double-sided forming method for a large-caliber aluminum-alloy tube spiral friction stir welding apparatus.

The double-sided welding double-sided forming method for a large-caliber aluminum-alloy tube spiral friction stir welding apparatus according to the present disclosure comprises:

Step 1: delivering, by a delivery machine, an aluminum-alloy plate into a roller kit, the roller kit coiling the aluminum-alloy plate into a tube;

Step 2: externally supporting the aluminum tube and performing inner friction stir welding;

Step 3: internally supporting the aluminum tube and performing outer friction stir welding.

Further, in the step 1, a misaligned edge of the coiled tube in a direction parallel to an opposite edge is less than 0.2mm, and a misaligned edge perpendicular to the opposite side is less than 0.2mm.

Further, in step 2, the aluminum tube is externally supported at a 270° position, and the inner friction stir welding is performed inside the aluminum plate, wherein the external support force is 20∼30kN.

Further, in step 3, the aluminum tube is supported inside the aluminum tube at a position where a fourth quadrant and an inner welding external support wheel assume a 15°∼25° angle, and a friction stir welding machine head is disposed outside of the aluminum tube.

Further, inner welding is first performed, and then outer welding is performed.

An advantage of the present disclosure lies in that the friction stir welding effectively solves the drawbacks such as more fusion welding defects and a lower yield rate, such that it may implement a machining speed five times the fusion welding, thereby implementing high-efficiency, high-quality, and automated machining of large-caliber aluminum-alloy tubes.

### BRIEF DESCRIPTION OF THE DRAWINGS

Fig. 1 is a structural diagram of an apparatus which is adopted by a double-sided welding double-sided forming method for a large-caliber aluminum-alloy tube spiral friction stir welding apparatus according to an embodiment of the present disclosure;
Fig. 2 is a structural diagram of an outer welding internal support wheel adopted by a double-sided welding double-sided forming method for a large-caliber aluminum-alloy tube spiral friction stir welding apparatus according to an embodiment of the present disclosure; and
Fig. 3 is a schematic diagram of butt edges of a tube coiled using a double-sided welding double-sided forming method for a large-caliber aluminum-alloy tube spiral friction stir welding apparatus according to an embodiment of the present disclosure.

### DETAILED DESCRIPTION OF EMBODIMENTS

Details are illustrated hereinafter to facilitate sufficient understanding of the present disclosure. However, the present disclosure may also be implemented in other embodiments different from what are described here. Those skilled in the may make similar extensions without departing from the idea of the present disclosure; therefore, the present disclosure is not limited by the preferred embodiments disclosed hereinafter.

Further, the present disclosure will make detailed description with schematic diagrams. When describing the embodiments of the present disclosure in detail, the schematic diagrams are only examples to facilitate illustration, which shall not limit the protection scope of the present disclosure.

It is seen from the Background that the existing spiral friction stir welding and forming method for a large-caliber aluminum-alloy tube has a low efficiency and a poor welding quality, which, according to the Inventor after study, is caused by the properties of arc welding. The friction stir welding is a high-efficiency and high-quality welding process. However, to apply the friction stir welding to an aluminum-alloy tube, an imminent problem to solve is welding support. Through further study, the Inventor provides a double-sided welding double-sided forming apparatus and method for spiral friction stir welding a large-caliber aluminum-alloy tube.

Hereinafter, the spirit and essence of the present disclosure will be further illustrated in conjunction with the drawings and the embodiments.

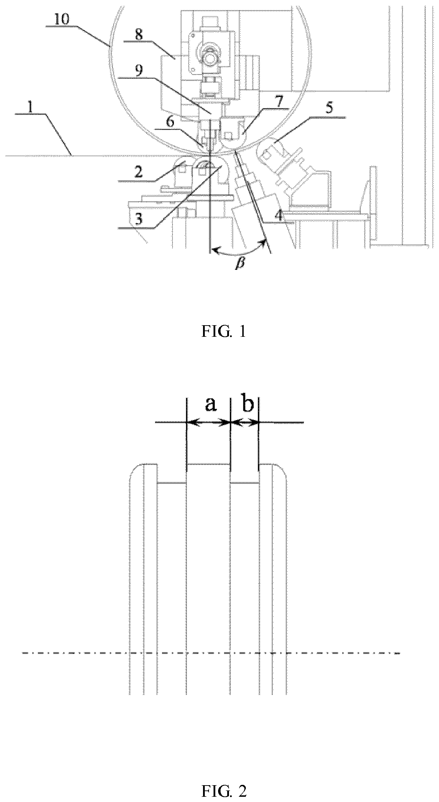

As shown in Fig. 1, the double-sided welding double-sided forming apparatus for spiral friction stir welding a large-caliber aluminum-alloy tube, comprising: a roller kit, an inner welding external support wheel 3, an outer welding machine head 4, an outer welding internal support wheel 7, a beam 8, and an inner welding machine head 9; the roller kit coils the aluminum-alloy plate 10 into a tube; the inner welding external support wheel 3 is disposed outside of the tube, and the outer welding internal support wheel 7 is disposed inside the tube.

Continuing reference to Fig. 1, the roller kit includes: a first roller unit 2, a second roller unit 6, and a third roller unit 5, wherein the first roller unit moves upwardly and downwardly to meet forming requirements of various steel tube specifications, the second roller unit 6 may be depressed in parallel or tilt upwardly and downwardly to coil and depress the aluminum-alloy plate; the third roller unit moves horizontally to meet the requirements of different tube diameters. The method of coiling and forming the plate material using the roller kit has been well known to those skilled in the art, which will not be detailed here.

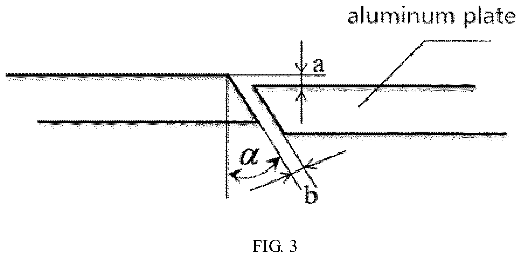

The aluminum-alloy plate 10 enters the roller kit along an acute angle; a direction for the revolving shaft of the roller kit to enter the double-sided forming apparatus is perpendicular to a direction for the aluminum-alloy plate to enter the double-sided forming apparatus. The roller kit coils the aluminum-alloy plate into a tube, where a butted line of the tube is a spiral line. To prevent overlap of the butted edges during sealing, as shown in Fig. 3, the oblique edges of the aluminum-alloy plate are butted, where an interstice b between the butted edges and their parallel opposite edge is less than 0.2mm, and the alignment tolerance *a* of the butted edges perpendicular to the opposite edges is less than 0.2mm; if the interstice is too large, the welding will be poor in quality and insecure. The opposite edges shall not overlap.

After positions of the inner welding external support wheel 3, the external welding head 4, the outer welding internal support wheel 7, and the inner welding machine head 9 are set to meet the requirement of coiling into a tube, and a position of the inner welding external support wheel 3 corresponds to a position of the inner welding machine head 9, where they are disposed at the outer surface and the inner surface of the tube, respectively; during welding the inner surface portion, the inner welding external support wheel 3 provides a support force at the position corresponding to the outer surface of the tube.

Continuing reference to Fig. 1, a periphery of the outer welding internal support wheel is parallel to a welding trajectory; a periphery of the inner welding external support wheel is parallel to the welding trajectory. A rectangular coordinate system is set up within a section of the aluminum-alloy tube perpendicular to the axis, and external support inner friction stir welding is carried out at a 270° position, because the butting precision is the highest at the 270°; the inner welding machine head is mounted on the beam 8, which may implement a front-rear movement within 20mm so as to find and adjust an inner welding point, and may implement an up-down movement within 60mm for changing an inner stir head. The outer welding machine head 4 is in the fourth quadrant, with an included angle β relative to the inner welding machine head 9 being 15°∼25°, e.g., 18° and 20°. The external welding machine is mounted on the outer base, which may implement a front-rear movement within 20mm, for finding and adjusting an outer welding point, which may also implement an up-down movement within 60mm.

The beam is grooved inside to accommodate a machine head box; a relative movement between the beam and the machine head box is implemented by a combination of an actuator and a sliding block or a combination of an electric motor and a ball screw.

Referring to Fig. 2, a surface of the external welding inner support wheel has a groove distributed peripherally and laterally. The groove is for avoiding a flash generated by the inner friction stir welding; a width of a contact between the outer welding internal support wheel and the tube ranges from 13mm to 16mm. In one example, a groove with *b*= about 10mm is milled at the left and right side of the outer welding internal support wheel, respectively, for avoiding the flash generated by the inner friction stir welding, and a wheel with *a*= about 15mm is reserved to provide an upsetting force of 20∼30kN required for the friction stir welding.

The welding method for a large-caliber aluminum-alloy tube spiral friction stir welding double-sided welding double-sided forming apparatus according to the present disclosure comprises:
Step 1: delivering, by a delivery machine, an aluminum-alloy plate into a roller kit, the roller kit coiling the aluminum-alloy plate into a tube;
Step 2: externally supporting the aluminum tube and performing inner friction stir welding;
Step 3: internally supporting the aluminum tube and performing outer friction stir welding.

In other embodiments of the present disclosure, before coiling the aluminum-alloy plate into a tube, the method further comprises: milling, by an edge milling machine, the aluminum-alloy plate. In the embodiments of the present disclosure, inner welding is performed first, and then outer welding is performed. Inner welding first helps shape the aluminum-alloy tube and improves the welding quality.

The present disclosure solves the drawbacks of the existing welding method for a large-caliber aluminum-alloy tube, such as low efficiency and yield and insufficient rigidity, accuracy, and strength, and implements high-quality and high-efficiency automated machining of the large-caliber aluminum-alloy tube.

Although the preferred embodiments of the present disclosure have been disclosed above, the preferred embodiments are not intended for limiting the present disclosure, any person of skill in the art may change and modify the technical solution of the present disclosure using the method and technical contents disclosed above without departing from the spirit and scope of the present disclosure; therefore, any contents without departing from the technical solution of the present disclosure and any simple amendment, equivalent change, and modification to the embodiments based on the technical substance of the present disclosure fall within the protection scope of the technical solution of the present disclosure.

## Claims

1. A double-sided welding double-sided forming method for a large-caliber aluminum-alloy tube spiral friction stir welding apparatus comprises:
Step 1: delivering, by a delivery machine, an aluminum-alloy plate into a roller kit, the roller kit coiling the aluminum-alloy plate into a tube;
Step 2: externally supporting the aluminum tube and performing inner friction stir welding;
Step 3: internally supporting the aluminum tube and performing outer friction stir welding.

2. The double-sided welding double-sided forming method for a large-caliber aluminum-alloy tube spiral friction stir welding apparatus according to claim 1, wherein in the step 1, a misaligned edge of the coiled tube in a direction parallel to an opposite edge is less than 0.2mm, and a misaligned edge perpendicular to the opposite side is less than 0.2mm.

3. The double-sided welding double-sided forming method for a large-caliber aluminum-alloy tube spiral friction stir welding apparatus according to claim 1, wherein in the step 2, the aluminum tube is externally supported at a 270° position, and the inner friction stir welding is performed inside the aluminum plate, wherein the external support force is 20∼30kN.

4. The double-sided welding double-sided forming method for a large-caliber aluminum-alloy tube spiral friction stir welding apparatus according to claim 1, wherein in the step 3, the aluminum tube is supported inside the aluminum tube at a position where a fourth quadrant and an inner welding external support wheel assume a 15°∼25° angle, and a friction stir welding machine head is disposed outside of the aluminum tube.

5. The double-sided welding double-sided forming method for a large-caliber aluminum-alloy tube spiral friction stir welding apparatus according to claim 1, wherein inner welding is first performed, and then outer welding is performed.
